# EUROPÄISCHE PATENTSCHRIFT

(11) **EP 4 397 595 B1**
(45) Veröffentlichungstag und Bekanntmachung des Hinweises auf die Patenterteilung: **09.12.2026**
(21) Anmeldenummer: 23218285.7
(22) Anmeldetag: 19.12.2023
(51) Int. Cl.: B65B 25/22, G05B 19/418

(54) **EINSTELLEN EINER VERPACKUNGSLINIE BASIEREND AUF EINER SIMULATION**
SETTING A PACKAGING LINE BASED ON SIMULATION
RÉGLAGE D'UNE LIGNE D'EMBALLAGE SUR LA BASE D'UNE SIMULATION

(30) Priorität: 04.01.2023 DE 102023100125
(43) Veröffentlichungstag der Anmeldung: 10.07.2024
(73) Patentinhaber: MULTIVAC Sepp Haggenmüller SE & Co. KG, 87787 Wolfertschwenden (DE)
(72) Erfinder: Gropper, Daniel, 87737 Boos (DE); Schilling, Pascal, 88299 Leutkirch im Allgäu (DE)
(74) Vertreter: Grünecker Patent- und Rechtsanwälte PartG mbB

(56) Entgegenhaltungen:
- EP-A1- 3 495 911
- EP-A1- 3 944 034
- CN-B- 112 083 698
- HALENAROVA LENKA ET AL: "Digital Twin proposal using the Matlab-Stateflow model and Docker containers", 2022 CYBERNETICS & INFORMATICS (K&I), IEEE, 11 September 2022 (2022-09-11), pages 1 - 6, XP034214919, DOI: 10.1109/KI55792.2022.9925931

## Beschreibung

Die Erfindung betrifft eine Verpackungslinie mit einem Produktbereitsteller zum Bereitstellen von zu verpackenden Produkten und einer Verpackungsmaschine zum Verpacken der bereitgestellten Produkte.

Zum Beispiel aus der DE 10 2018 204 031 A1 ist eine Verpackungslinie bekannt, bei der ein Slicer einem Förderbandsystem einer Tiefziehverpackungsmaschine Produkte zum Verpacken durch die Tiefziehverpackungsmaschine zuführt. Das Förderbandsystem umfasst ein Pufferbandmodul, welches als Vorpositionierer und Speicher einsetzbar ist, aus dem kontinuierlich Produkte weitertransportiert werden können.

Die EP 3 495 911 A1 offenbart den Einsatz einer Simulation mittels Digital Twin in einer Abfüllanlage zum Abfüllen einer Flüssigkeit in ein Gefäß. Es wird das Füllen des Gefäßes simuliert und basierend auf der Simulation ein Satz von Steuerparametern bestimmt, gemäß welchem eine Automatisierungskomponente dann im tatsächlichen Befüllvorgang arbeitet.

Der Artikel Halenârovâ Lenka et al.: "Digital Twin proposal using the Matlab-Stateflow model and Docker containers", 2022 Cybernetics & Informatics (K&I) beschreibt den Einsatz eines Digital Twins in einem System, welches unter Anderem zum Befüllen von Flaschen ausgelegt ist.

Die EP 3 944 034 A1 offenbart eine Simulation im Zusammenhang mit einem Transportsystem für einen linearen Synchronmotor.

Die CN 112 083 698 B offenbart eine Simulation mittels Digital Twin für eine Produktionslinie.

Es ist Aufgabe der Erfindung, einen verbesserten Weg zum Betrieb einer Verpackungslinie bereitzustellen.

Gemäß einem Aspekt der Erfindung wird ein Verfahren zum Betrieb einer Verpackungslinie bereitgestellt. Die Verpackungslinie umfasst einen Produktbereitsteller und eine Verpackungsmaschine. Der Produktbereitsteller ist zum Bereitstellen von zu verpackenden Produkten konfiguriert. Die Verpackungsmaschine ist zum Verpacken der bereitgestellten Produkte konfiguriert. Es werden mehrere Simulationsdurchgänge mittels eines Simulationsprogramms durchgeführt. Jeder Simulationsdurchgang enthält folgende Schritte: a) Zuführen eines Satzes von Eingangsparametern an das Simulationsprogramm; und b) Simulieren eines Betriebs der Verpackungslinie mit dem Simulationsprogramm basierend auf dem zugeführten Satz von Eingangsparametern. Basierend auf einem Ergebnis der mehreren Simulationsdurchgänge wird zumindest ein Einstellparameter zum Einstellen der Verpackungslinie bereitgestellt.

Durch ein Simulieren eines Betriebs der Verpackungslinie können Voraussagen über einen Betrieb der Verpackungslinie getroffen werden. Das Simulationsprogramm kann komplexe Wechselwirkungen zwischen einzelnen Komponenten der Verpackungslinie berücksichtigen. Das Durchführen einer Simulation eines Betriebs der Verpackungslinie kann gegenüber einem Ausprobieren an der tatsächlichen Verpackungslinie eine bedeutende Zeit- und Materialersparnis bedeuten.

Durch das Bereitstellen zumindest eines Einstellparameters zum Einstellen der Verpackungslinie basierend auf einem Ergebnis des zumindest einen Simulationsdurchgangs kann eine Qualität der Einstellung der Verpackungslinie verbessert werden. Insbesondere kann eine Bedienung der Verpackungsmaschine auch für weniger erfahrene Bediener erleichtert werden. Durch ein Zurückgreifen auf eine Simulation zum Einstellen der Verpackungslinie kann eine Notwendigkeit zu einem Ausprobieren von Einstellparametern im Betrieb der Verpackungslinie durch einen Bediener verringert werden. Hierdurch kann ein effizienter und/oder materialsparender Betrieb der Verpackungslinie begünstigt werden.

Das Simulationsprogramm kann einen Digital Twin der Verpackungslinie umfassen. Der Digital Twin der Verpackungslinie kann ein Computermodell der Verpackungslinie sein oder umfassen, welches Eigenschaften und Verhalten der Verpackungslinie widerspiegelt.

Ein Simulationsdurchgang kann das Simulieren des Betriebs der Verpackungslinie während einer Simulationszeitspanne umfassen. Die Simulationszeitspanne ist eine Zeitspanne innerhalb der Simulation. Wird also beispielsweise simuliert, wie die Verpackungslinie über eine Zeitspanne von zehn Minuten hinweg läuft, beträgt die Simulationszeitspanne zehn Minuten. Die Simulationszeitspanne kann deutlich kürzer sein, als die zum Durchführen des Simulationsvorgangs erforderliche Zeit. Die Simulationszeitspanne kann in dem Simulationsprogramm fest vorgegeben sein oder von einem Bediener des Simulationsprogramms einstellbar sein. Die Simulationszeitspanne kann beispielsweise zwischen einer Minute und fünf Stunden, oder zwischen drei Minuten und zwei Stunden, oder zwischen fünf Minuten und zwei Stunden, oder zwischen zehn Minuten und einer Stunde, oder zwischen zehn Minuten und 30 Minuten liegen.

Zumindest ein Eingangsparameter des Satzes von Eingangsparametern ist ein möglicher Einstellparameter der Verpackungslinie. Insbesondere kann der Satz von Eingangsparametern zumindest einen, oder zumindest zwei, oder zumindest drei, oder zumindest fünf, oder zumindest zehn Eingangsparameter umfassen, welche jeweils einen möglichen Einstellparameter der Verpackungslinie darstellen. Der Satz von Eingangsparametern kann beispielsweise zumindest einen möglichen Einstellparameter des Slicers umfassen. Der Satz von Eingangsparametern kann beispielsweise zumindest einen möglichen Einstellparameter der Verpackungsmaschine umfassen. Der Satz von Eingangsparametern kann zumindest einen möglichen Einstellparameter der Verpackungsmaschine und einen möglichen Einstellparameter des Slicers umfassen.

Ein möglicher Einstellparameter der Verpackungslinie kann beispielsweise eine Einstellung eines Antriebs der Verpackungslinie umfassen, insbesondere eine Drehzahl oder eine Arbeitsfrequenz des Antriebs. Der Antrieb der Verpackungslinie kann beispielsweise ein Antrieb des Slicers oder ein Antrieb der Verpackungsmaschine sein.

Sämtliche Eingangsparameter des Satzes von Eingangsparametern können mögliche Einstellparameter der Verpackungslinie sein.

Die mehreren Simulationsdurchgänge können insbesondere zumindest zwei Simulationsdurchgänge sein. In jedem Simulationsdurchgang kann ein anderer Satz von Eingangsparametern an das Simulationsprogramm zugeführt werden. Die Sätze von Eingangsparametern können sich jeweils in einem oder mehreren Eingangsparametern voneinander unterscheiden. Basierend auf dem Durchführen mehrerer Simulationsdurchgänge mit unterschiedlichen Eingangsparametern kann ein Betrieb der Verpackungslinie zumindest teilweise optimiert werden. Es können Simulationsergebnisse von Simulationsdurchgängen mit unterschiedlichen Eingangsparametern miteinander verglichen werden.

Zumindest ein Eingangsparameter des Satzes von Eingangsparametern kann über mehrere Simulationsdurchgänge hinweg gleich bleiben. Der zumindest eine über mehrere Simulationsdurchgänge hinweg gleichbleibende Eingangsparameter kann beispielweise ein Einstellparameter der Verpackungslinie sein, der fest vorgegeben ist und/oder beibehalten werden soll.

Zumindest ein Eingangsparameter des Satzes von Eingangsparametern kann einen momentan laufenden Arbeitsbetrieb der Verpackungslinie beschreiben. Insbesondere kann zumindest ein Eingangsparameter des Satzes von Eingangsparametern ein momentan im laufenden Arbeitsbetrieb der Verpackungslinie eingestellter Einstellparameter sein. Der zumindest eine einen momentan laufenden Arbeitsbetrieb der Verpackungslinie beschreibende Eingangsparameter kann über mehrere Simulationsdurchgänge hinweg gleich bleiben.

Zumindest ein Eingangsparameter des Satzes von Eingangsparametern wird über mehrere Simulationsdurchgänge hinweg variiert. In aufeinanderfolgenden Simulationsdurchgängen kann zumindest ein Eingangsparameter unterschiedliche Werte aufweisen. Unterschiedliche Werte des zumindest einen Eingangsparameters für die mehreren Simulationsdurchgänge können beispielsweise von einem Bediener eingegeben oder nach einem vorgegebenen Algorithmus automatisch bestimmt werden. Der zumindest eine Eingangsparameter, welcher über mehrere Simulationsdurchgänge hinweg variiert wird, ist ein möglicher Einstellparameter der Verpackungslinie, insbesondere ein möglicher Einstellparameter des Produktbereitstellers oder ein möglicher Einstellparameter der Verpackungsmaschine.

Der basierend auf dem Ergebnis der mehreren Simulationsdurchgänge zum Einstellen der Verpackungslinie bereitgestellte zumindest eine Einstellparameter kann einem Eingangsparameter eines Simulationsdurchgangs entsprechen, insbesondere einem Eingangsparameter eines Simulationsdurchgangs, in welchem der simulierte Betrieb der Verpackungslinie gewünschten Zielsetzungen entsprach.

Jeder Simulationsdurchgang kann folgenden Schritt umfassen: c) Bewerten eines Ergebnisses des Simulationsdurchgang. Das Bewerten des Ergebnisses des Simulationsdurchgangs kann umfassen, dem Simulationsdurchgang eine Bewertung zuzuordnen. Die Bewertung kann beispielsweise als Punktzahl oder als Einordnung in eine Bewertungskategorie ausgebildet sein. Das Bewerten des Ergebnisses des Simulationsdurchgangs kann anhand eines vordefinierten Kriterienkatalogs oder anhand eines oder mehrerer vordefinierter Kriterien erfolgen. Die Bewertung des Ergebnisses des Simulationsdurchgangs kann beispielsweise anhand einer Anzahl von in dem Simulationsdurchgang während der Simulationszeitspanne in der Simulation korrekt hergestellter Verpackungen erfolgen. Simulationsdurchgänge, in denen innerhalb der Simulationszeitspanne eine höhere Anzahl simulierter Verpackungen hergestellt wurden, können höher oder besser bewertet werden. Die Bewertung des Ergebnisses eines Simulationsdurchgangs kann eine Minimierung eines Materialverbrauchs berücksichtigen. Simulationsdurchgänge, in denen pro korrekt produzierter Verpackung weniger simuliertes Verpackungsmaterial und/oder weniger simuliertes Produkt verbraucht wird, können höher oder besser bewertet werden.

Der basierend auf dem Ergebnis der mehreren Simulationsdurchgänge zum Einstellen der Verpackungslinie bereitgestellte zumindest eine Einstellparameter kann basierend auf einem Vergleich der Ergebnisse der einzelnen Simulationsdurchgänge bestimmt werden. Es kann ein am höchsten bewerteter Simulationsdurchgang ausgewählt werden und der zumindest eine Einstellparameter zum Einstellen der Verpackungslinie basierend auf diesem Simulationsdurchgang bereitgestellt werden. Beispielsweise kann zumindest ein Eingangsparameter des Simulationsdurchgangs, welcher am besten bewertet wurde, als Einstellparameter zum Einstellen der Verpackungslinie bereitgestellt werden.

Das Verfahren kann während eines Arbeitsbetriebs der Verpackungslinie durchgeführt werden. Insbesondere kann der zumindest eine Simulationsdurchgang während eines Arbeitsbetriebs der Verpackungslinie durchgeführt werden. Durch den zumindest einen Simulationsdurchgang kann im laufenden Betrieb der Verpackungslinie simuliert werden, welche Auswirkungen das Ändern eines Einstellparameters der Verpackungslinie haben würde. Beispielsweise kann ein Kandidatenwert für eine Änderung eines Einstellparameters als Eingangsparameter an das Simulationsprogramm übermittelt werden, insbesondere zusammen mit einem oder mehreren weiteren Eingangsparametern, welche beispielweise einen momentan laufenden Arbeitsbetrieb der Verpackungslinie beschreiben können.

Das Verfahren, oder zumindest der zumindest eine Simulationsdurchgang kann vor einem Betrieb der Verpackungslinie durchgeführt werden, um vorab eine geeignete Einstellung für die Verpackungslinie zu ermitteln.

Der basierend auf einem Ergebnis des zumindest einen Simulationsdurchgangs bereitgestellte zumindest eine Einstellparameter zum Einstellen der Verpackungslinie kann als Einstellempfehlung angezeigt werden. Die Einstellempfehlung kann beispielsweise an einem Display der Verpackungslinie angezeigt werden.

Der basierend auf einem Ergebnis des zumindest einen Simulationsdurchgangs bereitgestellte zumindest eine Einstellparameter zum Einstellen der Verpackungslinie kann automatisch zur Einstellung der Verpackungslinie übernommen werden. Das automatische Übernehmen kann im laufenden Betrieb der Verpackungslinie erfolgen. Die Verpackungslinie kann hierdurch gewissermaßen selbst ihren Betrieb optimieren.

Der Produktbereitsteller kann im laufenden Arbeitsbetrieb der Verpackungslinie kontinuierlich oder intermittierend Produkte bereitstellen.

Die Simulationsdurchgänge können durch eine Simulationseinrichtung durchgeführt werden. Die Simulationseinrichtung kann Teil der Verpackungslinie sein und/oder an der Verpackungslinie vorgesehen sein. Die Simulationseinrichtung kann Teil einer Steuerung einer Komponente oder einer Station der Verpackungslinie sein. Die Simulationseinrichtung kann Teil einer Steuerung des Produktbereitstellers sein. Die Simulationseinrichtung kann Teil einer Steuerung der Verpackungsmaschine sein. Die Simulationseinrichtung kann Teil einer Liniensteuerung der Verpackungslinie sein. Die Liniensteuerung kann einer Steuerung des Produktbereitstellers und/oder einer Steuerung der Verpackungsmaschine übergeordnet sein.

Die Simulationseinrichtung kann extern zu der Verpackungslinie vorliegen. Die Simulationseinrichtung kann in einem anderen Raum oder in einem anderen Gebäude vorliegen als die Verpackungslinie. Die Simulationseinrichtung kann mit der Verpackungslinie in Kommunikationsverbindung stehen. Die Simulationseinrichtung kann Teil eines Cloud-Systems sein. Die Simulationseinrichtung kann dazu konfiguriert sein, über eine Datenverbindung mit der Verpackungslinie zu kommunizieren. Die Simulationseinrichtung kann dazu konfiguriert sein, über ein Netzwerk mit der Verpackungslinie zu kommunizieren. Die Simulationseinrichtung kann dazu konfiguriert sein, über das Internet mit der Verpackungslinie zu kommunizieren.

Die Simulationseinrichtung kann eine Recheneinheit und einen Datenspeicher umfassen. Das Simulationsprogramm kann auf dem Datenspeicher gespeichert sein. Die Recheneinheit kann zum Ausführen des Simulationsprogramms konfiguriert sein.

Bei den zu verpackenden Produkten kann es sich um Lebensmittelprodukte handeln, insbesondere um Wurstprodukte, oder um Fleischprodukte, oder um Käseprodukte.

Der Produktbereitsteller kann einen Produkterzeuger umfassen. Der Produkterzeuger kann beispielsweise zum Formen von Produkten aus einem Rohmaterial konfiguriert sein.

Der Produktbereitsteller kann einen Produktschneider umfassen. Der Produktschneider kann insbesondere als Slicer für Lebensmittelprodukte ausgebildet sein. Der Slicer kann dazu konfiguriert sein, die Produkte scheibenweise aufzuschneiden und die scheibenweise aufgeschnittenen Produkte portionsweise abzugeben. Eine Portion kann eine oder mehrere Produktscheiben umfassen. Die Produktscheiben einer Portion können von dem Slicer als Stapel oder als schindelartige Anordnung von Produktscheiben abgegeben werden. Der Slicer kann ein rotierendes Messer zum Aufschneiden von Produkten umfassen. Der Slicer kann eine Produktzuführung umfassen, welche dazu konfiguriert ist, dem rotierenden Messer des Slicers aufzuschneidendes Produkt zuzuführen.

Der Produktbereitsteller kann eine Produkttransporteinrichtung umfassen. Die Produkttransporteinrichtung kann eines oder mehrere Förderbänder umfassen. Die Produkttransporteinrichtung kann ein Greifersystem umfassen. Die Produkttransporteinrichtung kann dazu konfiguriert sein, zu verpackende Produkte auf Verpackungsträgern zu platzieren.

Die Verpackungsmaschine kann dazu konfiguriert sein, die bereitgestellten Produkte in Verpackungen zu verpacken. Die Verpackungen können beispielsweise thermoformbares Material umfassen oder aus thermoformbarem Material bestehen. Die Verpackungsmaschine kann eine Einlegestrecke umfassen, in welcher die zu verpackenden Produkte portionsweise auf Verpackungsträgern platziert werden. Die Verpackungsträger können als Schalen oder als Verpackungsmulden oder als flache Verpackungsträger ausgebildet sein. Die Verpackungsmaschine kann eine Siegelstation umfassen, in welcher die bestückten Verpackungsträger verschlossen werden. Die Verpackungsmaschine, insbesondere die Siegelstation der Verpackungsmaschine kann getaktet arbeiten. Die Verpackungsmaschine kann beispielsweise als Tiefziehverpackungsmaschine oder als Schalenverschließmaschine ausgebildet sein.

Gemäß einem weiteren Aspekt der Erfindung wird ein Verpackungssystem bereitgestellt. Das Verpackungssystem umfasst eine Verpackungslinie. Die Verpackungslinie umfasst einen Produktbereitsteller und eine Verpackungsmaschine. Der Produktbereitsteller ist zum Bereitstellen von zu verpackenden Produkten konfiguriert. Die Verpackungsmaschine ist zum Verpacken der bereitgestellten Produkte konfiguriert. Das Verpackungssystem umfasst eine Simulationseinrichtung. Die Simulationseinrichtung ist dazu konfiguriert, einen Betrieb der Verpackungslinie mit einem Simulationsprogramm basierend auf einem zugeführten Satz von Eingangsparametern zu simulieren.

Das Simulationsprogramm kann einen Digitalen Twin der Verpackungslinie umfassen.

Die Simulationseinrichtung ist dazu konfiguriert, zumindest einen Eingangsparameter aus dem Satz von Eingangsparametern über mehrere Simulationsvorgänge hinweg zu variieren. Die Simulationseinrichtung ist dazu konfiguriert, für die verbleibenden Eingangsparameter jeweils einen im laufenden Arbeitsbetrieb der Verpackungslinie momentan vorliegenden Wert zu verwenden.

Der Produktbereitsteller kann einen Produkterzeuger, oder einen Produktschneider, oder eine Produkttransporteinrichtung umfassen.

Die Simulationseinrichtung kann Teil der Verpackungslinie sein oder zu der Verpackungslinie extern vorgesehen sein.

Wie beschrieben, betrifft die Erfindung gemäß einem Aspekt ein Verfahren zum Betrieb einer Verpackungslinie und gemäß einem weiteren Aspekt ein Verpackungssystem. In Bezug auf einen beliebigen dieser Aspekte beschriebene Merkmale, Vorteile und Erläuterungen lassen sich auf den anderen Aspekt übertragen. Das Verfahren kann mittels des Verpackungssystems durchgeführt werden. Das Verpackungssystem kann zum Durchführen des Verfahrens geeignet, ausgelegt und/oder konfiguriert sein.

Im Folgenden wird die Erfindung anhand eines Ausführungsbeispiels unter Bezugnahme auf die Figuren weiter erläutert.
Fig. 1 zeigt eine schematische Darstellung eines Verpackungssystems 1 gemäß einer Ausführungsform mit einem Produktschneider.
Fig. 2 zeigt eine schematische Darstellung eines Verpackungssystems 1 gemäß einer Ausführungsform mit einem Produkterzeuger.

In beiden Figuren umfasst das Verpackungssystem 1 eine Verpackungslinie 3. Die Verpackungslinie 3 umfasst einen Produktbereitsteller 5 und eine Verpackungsmaschine 7, welche entlang einer Produktionsrichtung 9 hintereinander angeordnet sind.

Der Produktbereitsteller 5 stellt im Betrieb der Verpackungslinie 1 Portionen 11 von zu verpackendem Produkt bereit. Als eine Portion 11 wird dabei die Menge an Produkt bezeichnet, welche in einer Verpackung verpackt werden soll. Eine Portion 11 kann mehrere einzelne Produktteile umfassen oder lediglich ein Produktteil.

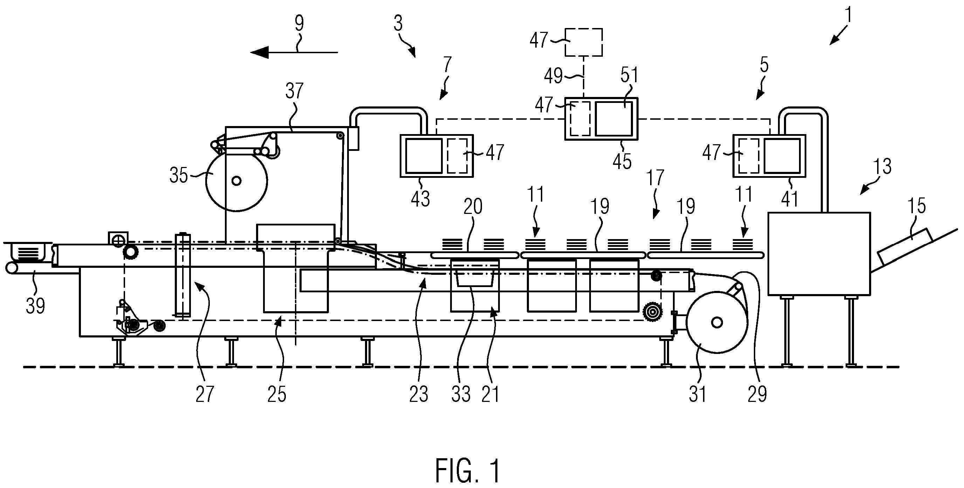

In der in Fig. 1 dargestellten Ausführungsform umfasst der Produktbereitsteller 5 einen Produktschneider 13 in Form eines Slicers zum Aufschneiden von Lebensmittelprodukten. Dem Produktschneider 13 werden größere Produktstücke 15 zugeführt. Bei den größeren Produktstücken 15 kann es sich beispielsweise um Wurst- oder Käseblöcke oder um Schinken- oder Fleischstücke handeln. Die Produktstücke 15 werden von dem Produktschneider 13 in Scheiben geschnitten und als Portionen 11 abgegeben.

Der Produktbereitsteller 5 umfasst in der dargestellten Ausführungsform zudem eine Produkttransporteinrichtung 17. Die Produkttransporteinrichtung 17 kann als Hintereinanderanordnung mehrerer Förderbänder 19, 20 ausgebildet sein. Die Portionen 11 werden von dem Produktschneider 13 an die Produkttransporteinrichtung 17 übergeben und von der Produkttransporteinrichtung 17 weiter zu der Verpackungsmaschine 7 transportiert.

In der dargestellten Ausführungsform ist die Verpackungsmaschine 7 als Tiefziehverpackungsmaschine ausgebildet. Die Verpackungsmaschine 7 umfasst entlang der Produktionsrichtung 9 hintereinander eine Formstation 21, eine Einlegestrecke 23, eine Siegelstation 25 und eine Schnittstation 27. Eine Folienbahn 29 wird stromaufwärts der Formstation 21 von einer Vorratsrolle 31 abgezogen und entlang der Produktionsrichtung 9 durch die Verpackungsmaschine 7 gefördert. In der Formstation 21 werden durch Tiefziehen Verpackungsmulden 33 in der Folienbahn 29 ausgeformt. In der Einlegestrecke 23 werden die Portionen 11 von einem als Einlegeband ausgebildeten Förderband 20 in die Verpackungsmulden 33 eingelegt. Alternativ könnte beispielsweise die Produkttransporteinrichtung 17 als Greifersystem ausgebildet sein, welches die Portionen 11 in die Verpackungsmulden 33 einsetzt. Die mit Produkt befüllten Verpackungsmulden 33 werden in der Siegelstation 25 durch Ansiegeln einer von einer Vorratsrolle 35 abgezogenen Deckfolie 37 an die Folienbahn 29 verschlossen. In der Schnittstation 27 werden die verschlossenen Verpackungen einzeln oder gruppenweise aus dem Folienverbund gelöst, insbesondere durch Durchtrennen der Folienbahn 29 und der Deckfolie 37. Stromabwärts der Verpackungsmaschine 7 ist ein Abführband 39 vorgesehen, welches die Verpackungen von der Verpackungsmaschine 7 wegführt.

Der Produktbereitsteller 5 umfasst eine Steuerung 41, welche einen Betrieb des Produktbereitstellers 5 steuert. In der dargestellten Ausführungsform steuert die Steuerung 41 des Produktbereitstellers 5 sowohl den Produktschneider 13 als auch die Produkttransporteinrichtung 17. Die Steuerung 41 kann beispielsweise einen Antrieb für ein Schneidmesser des Produktschneiders 13 und einen Antrieb für einen Vorschub für die Produktstücke 15 steuern. Die Verpackungsmaschine 7 umfasst eine Steuerung 43. Die Steuerung 43 der Verpackungsmaschine 7 steuert einen Betrieb der Verpackungsmaschine 7. Die Steuerung 43 der Verpackungsmaschine 7 steuert beispielsweise den Betrieb der Formstation 21, den Betrieb der Siegelstation 25 und den Betrieb der Schnittstation 27.

Die Verpackungsmaschine 7 wird getaktet betrieben. In jedem Arbeitstakt erfolgt ein bestimmter Vorschub der Folienbahn 29 entlang der Produktionsrichtung 9. In jedem Arbeitstakt wird eine bestimmte Anzahl von Verpackungsmulden 33 in der Formstation 21 geformt. Gleichzeitig wird in jedem Arbeitstakt eine entsprechende Anzahl von Verpackungen in der Siegelstation 25 verschlossen.

Die Verpackungslinie 3 umfasst eine Liniensteuerung 45. Die Liniensteuerung 45 ist eine der Steuerung 41 des Produktbereitstellers 5 und der Steuerung 43 der Verpackungsmaschine 7 übergeordnete Steuerung.

Das Verpackungssystem 1 umfasst eine Simulationseinrichtung 47. Die Simulationseinrichtung 47 kann beispielsweise als Teil der Liniensteuerung 45 oder als Teil der Steuerung 41 des Produktbereitstellers 5 oder als Teil der Steuerung 43 der Verpackungsmaschine 7 ausgebildet sein. Alternativ kann die Simulationseinrichtung 47 extern zu der Verpackungslinie 3 ausgebildet sein. Beispielsweise kann eine extern ausgebildete Simulationseinrichtung 47 über eine Kommunikationsverbindung 49 mit der Verpackungslinie 3, insbesondere mit der Liniensteuerung 45 verbunden sein. Die Kommunikationsverbindung 49 kann beispielsweise eine drahtlose und/oder eine drahtgebundene Kommunikationsverbindung umfassen. Die Kommunikationsverbindung 49 kann beispielsweise für eine Kommunikation über ein Computernetzwerk oder über das Internet ausgebildet sein. Die Simulationseinrichtung 47 kann beispielsweise über ein Cloud-System zugänglich sein. In den Figuren sind verschiedene mögliche Standorte für die Simulationseinrichtung 47 dargestellt.

Die Simulationseinrichtung 47 kann eine Recheneinheit und einen Datenspeicher umfassen. Auf dem Datenspeicher kann ein Simulationsprogramm gespeichert sein. Die Recheneinheit kann zum Ausführen des Simulationsprogramms konfiguriert sein.

Das Simulationsprogramm kann einen Digital Twin der Verpackungslinie 3 umfassen.

In einem Simulationsdurchgang kann durch die Simulationseinrichtung 47 mittels des Simulationsprogramms basierend auf einem Satz von Eingangsparametern für den Simulationsdurchgang ein Betrieb der Verpackungslinie 3 simuliert werden. Der Satz von Eingangsparametern kann mögliche Einstellparameter der Verpackungslinie 3 und/oder Eingangsparameter umfassen, welche einen momentan laufenden Arbeitsbetrieb der Verpackungslinie 3 beschreiben. In einem Simulationsdurchgang kann der Betrieb der Verpackungslinie 3 mit den entsprechenden Eingangsparametern simuliert und ein Simulationsergebnis bewertet werden. Die Eingangsparameter können beispielsweise durch einen Bediener manuell vorgegeben werden oder von einer Steuerung 41, 43, 45 der Verpackungslinie 3 vorgegeben werden. Vorzugsweise werden mehrere Simulationsdurchgänge mit unterschiedlichen Eingangsparametern durchgeführt. Basierend auf den Ergebnissen der Simulationsdurchgänge kann zumindest ein Einstellparameter zum Einstellen der Verpackungslinie 3 bereitgestellt werden.

Beispielsweise kann ein Eingangsparameter, welcher einem Einstellparameter der Verpackungslinie 3 entspricht, über mehrere Simulationsdurchgänge hinweg variiert werden, während die verbleibenden Eingangsparameter über die mehreren Simulationsdurchgänge hinweg konstant gehalten werden. Die Ergebnisse der Simulationsdurchgänge können bewertet werden, beispielsweise nach der Anzahl von in der Simulation pro Zeiteinheit korrekt produzierten simulierten Verpackungen oder nach einem simulierten Materialverbrauch pro Verpackung in dem Simulationsdurchgang. Basierend auf der Bewertung der Ergebnisse der Simulationsdurchgänge kann ein Wert des über die Simulationsdurchgänge variierten Eingangsparameters, welcher einem am besten bewerteten Simulationsdurchgang entspricht, als Einstellparameter zum Einstellen der Verpackungslinie 3 bereitgestellt werden. Der bereitgestellte Einstellparameter kann beispielsweise automatisch in den Betrieb der Verpackungslinie 3 übernommen werden, oder an einer Anzeige 51 angezeigt werden.

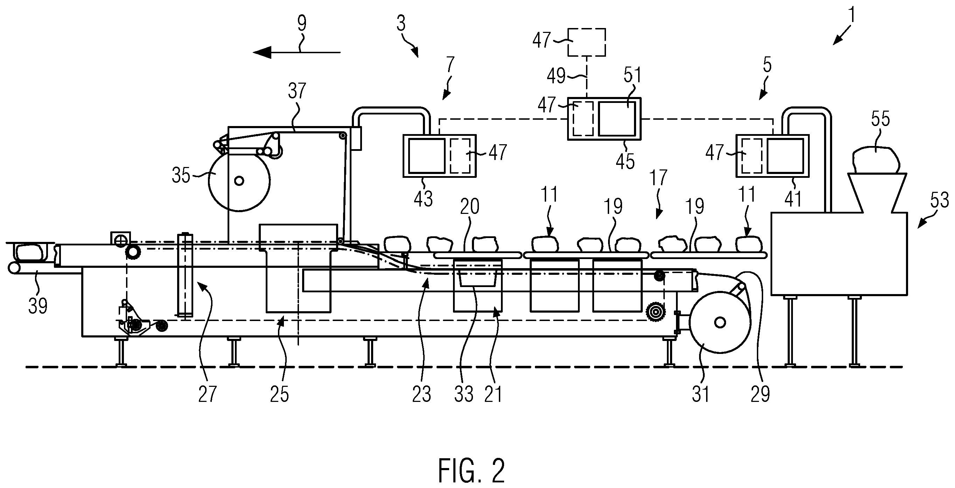

Fig. 2 zeigt eine alternative Ausführungsform, die sich von der Ausführungsform von Fig. 1 dadurch unterscheidet, dass der Produktbereitsteller 5 anstelle des Produktschneiders 13 einen Produkterzeuger 53 umfasst. Dem Produkterzeuger 53 wird Rohmaterial 55 zugeführt. Der Produkterzeuger 53 stellt aus dem Rohmaterial 55 zu verpackende Produkte her, welche als Portionen 11 abgegeben werden. Beispielsweise kann der Produkterzeuger 53 dazu ausgebildet sein, aus dem Rohmaterial 55 durch Formen die zu verpackenden Produkte herzustellen. Der Produkterzeuger 53 kann beispielsweise Formteile aus Hackfleisch herstellen. Ansonsten, insbesondere in Bezug auf die Simulationseinrichtung 47, kann die Ausführungsform aus Fig. 2 wie die Ausführungsform aus Fig. 1 ausgeführt sein.

## Patentansprüche

1. Verfahren zum Betrieb einer Verpackungslinie (3), wobei die Verpackungslinie (3) einen Produktbereitsteller (5) zum Bereitstellen von zu verpackenden Produkten und eine Verpackungsmaschine (7) zum Verpacken der bereitgestellten Produkte umfasst, wobei das Verfahren folgendes umfasst:
- Durchführen mehrerer Simulationsdurchgänge anhand eines Simulationsprogramms, wobei jeder Simulationsdurchgang folgende Schritte umfasst:
a) Zuführen eines Satzes von Eingangsparametern an das Simulationsprogramm; und
b) Simulieren eines Betriebs der Verpackungslinie (3) mit dem Simulationsprogramm basierend auf dem zugeführten Satz von Eingangsparametern; und
- Bereitstellen zumindest eines Einstellparameters zum Einstellen der Verpackungslinie (3) basierend auf einem Ergebnis der mehreren Simulationsdurchgänge,
wobei zumindest ein Eingangsparameter des Satzes von Eingangsparametern über mehrere Simulationsdurchgänge hinweg variiert wird, und
wobei der zumindest eine Eingangsparameter, welcher über mehrere Simulationsdurchgänge hinweg variiert wird, ein möglicher Einstellparameter der Verpackungslinie ist.

2. Verfahren nach Anspruch 1, wobei das Simulationsprogramm einen Digital Twin der Verpackungslinie (3) umfasst.

3. Verfahren nach Anspruch 1 oder 2, wobei unterschiedliche Werte des zumindest einen Eingangsparameters, welcher über mehrere Simulationsdurchgänge hinweg variiert wird, von einem Bediener eingegeben werden.

4. Verfahren nach einem der vorangehenden Ansprüche, wobei zumindest ein Eingangsparameter des Satzes von Eingangsparametern über mehrere Simulationsdurchgänge hinweg gleich bleibt.

5. Verfahren nach Anspruch 4, wobei der zumindest eine über mehrere Simulationsdurchgänge hinweg gleichbleibende Eingangsparameter ein Einstellparameter der Verpackungslinie (3) ist, der fest vorgegeben ist und/oder beibehalten werden soll.

6. Verfahren nach einem der vorangehenden Ansprüche, wobei zumindest ein Eingangsparameter des Satzes von Eingangsparametern einen momentan laufenden Arbeitsbetrieb der Verpackungslinie (3) beschreibt.

7. Verfahren nach Anspruch 6, wobei der zumindest eine einen momentan laufenden Arbeitsbetrieb der Verpackungslinie (3) beschreibende Eingangsparameter über mehrere Simulationsdurchgänge hinweg gleich bleibt.

8. Verfahren nach einem der vorangehenden Ansprüche, wobei jeder Simulationsdurchgang folgenden Schritt umfasst:
c) Bewerten eines Ergebnisses des Simulationsvorgangs.

9. Verfahren nach einem der vorangehenden Ansprüche, wobei der zumindest eine Einstellparameter für die Verpackungslinie (3) basierend auf einem Vergleich der Ergebnisse der einzelnen Simulationsdurchgänge bestimmt wird.

10. Verfahren nach einem der vorangehenden Ansprüche, wobei das Verfahren während eines Arbeitsbetriebs der Verpackungslinie (3) durchgeführt wird.

11. Verfahren nach einem der vorangehenden Ansprüche, wobei der zumindest eine Einstellparameter als Einstellempfehlung angezeigt wird und/oder wobei der zumindest eine Einstellparameter automatisch zur Einstellung der Verpackungslinie (3) übernommen wird.

12. Verpackungssystem (1) mit einer Verpackungslinie (3), wobei
die Verpackungslinie (3) einen Produktbereitsteller (5) umfasst, welcher zum Bereitstellen von zu verpackenden Produkten konfiguriert ist;
die Verpackungslinie (3) eine Verpackungsmaschine (7) umfasst, welche zum Verpacken der bereitgestellten Produkte konfiguriert ist;
das Verpackungssystem (1) eine Simulationseinrichtung (47) umfasst, welche dazu konfiguriert ist, einen Betrieb der Verpackungslinie (3) mit einem Simulationsprogramm basierend auf einem zugeführten Satz von Eingangsparametern zu simulieren; und
die Simulationseinrichtung dazu konfiguriert ist, zumindest einen Eingangsparameter aus dem Satz von Eingangsparametern über mehrere Simulationsvorgänge hinweg zu variieren, und für die verbleibenden Eingangsparameter jeweils einen im laufenden Arbeitsbetrieb der Verpackungslinie (3) momentan vorliegenden Wert zu verwenden.

13. Verpackungssystem nach Anspruch 12, wobei der Produktbereitsteller (5) einen Produkterzeuger (53), oder einen Produktschneider (13), oder eine Produkttransporteinrichtung (17) umfasst.

## Claims

1. A method for operating a packaging line (3), wherein the packaging line (3) comprises a product provider (5) for providing products to be packaged and a packaging machine (7) for packaging the provided products, wherein the method comprises:
- performing a plurality of simulation runs on the basis of a simulation program, each simulation run comprising the following steps:
a) supplying a set of input parameters to the simulation program; and
b) simulating an operation of the packaging line (3) with the simulation program based on the supplied set of input parameters; and
- providing at least one adjustment parameter for adjusting the packaging line (3) based on a result of the plurality of simulation runs,
wherein at least one input parameter of the set of input parameters is varied across a plurality of simulation runs, and
wherein the at least one input parameter which is varied across a plurality of simulation runs is a potential adjustment parameter of the packaging line.

2. The method according to claim 1, wherein the simulation program comprises a digital twin of the packaging line (3).

3. The method according to claims 1 or 2, wherein various values of the at least one input parameter which is varied across a plurality of simulation runs are input by an operator.

4. The method according to any one of the preceding claims, wherein at least one input parameter of the set of input parameters remains the same across a plurality of simulation runs.

5. The method according to claim 4, wherein the at least one input parameter which remains the same across a plurality of simulation runs is an adjustment parameter of the packaging line (3) which is fixedly predefined and/or is to be maintained.

6. The method according to any one of the preceding claims, wherein at least one input parameter of the set of input parameters describes a currently running operation of the packaging line (3).

7. The method according to claim 6, wherein the at least one input parameter describing a currently running operation of the packaging line (3) remains the same across a plurality of simulation runs.

8. The method according to any one of the preceding claims, wherein every simulation run comprises the following step:
c) evaluating a result of the simulation run.

9. The method according to any one of the preceding claims, wherein the at least one adjustment parameter for the packaging line is determined on the basis of a comparison of the results of the individual simulation runs.

10. The method according to any one of the preceding claims, wherein the method is carried out during an operation of the packaging line (3).

11. The method according to any one of the preceding claims, wherein the at least one adjustment parameter is displayed as an adjustment recommendation and/or wherein the at least one adjustment parameter is automatically adopted for adjusting the packaging line (3).

12. A packaging system (1) comprising a packaging line (3), wherein
the packaging line (3) comprises a product provider (5) configured to provide products to be packaged;
the packaging line (3) comprises a packaging machine (7) configured to package the provided products;
the packaging system (1) comprises a simulation device (47) configured to simulate an operation of the packaging line (3) using a simulation program based on a supplied set of input parameters; and
the simulation device is configured to vary at least one input parameter from the set of input parameters across a plurality of simulation runs, and to use a value currently present during an ongoing operation of the packaging line (3) for each of the remaining input parameters.

13. The packaging system according to claim 12, wherein the product provider (5) comprises a product generator (53) or a product cutter (13) or a product transport device (17).

## Revendications

1. Procédé d'exploitation d'une ligne d'emballage (3), dans lequel la ligne d'emballage (3) comprend un dispositif de fourniture de produits (5) permettant de fournir des produits à emballer et une machine d'emballage (7) permettant d'emballer les produits fournis, dans lequel le procédé comprend les étapes consistant à :
- mettre en œuvre plusieurs passes de simulation à l'aide d'un programme de simulation, dans lequel chaque passe de simulation comprend les étapes ci-dessous consistant à :
a) procurer un ensemble de paramètres d'entrée au programme de simulation ; et
b) simuler le fonctionnement de la ligne d'emballage (3) grâce au programme de simulation en se basant sur l'ensemble de paramètres d'entrée procuré ; et
- fournir au moins un paramètre de réglage permettant de régler la ligne d'emballage (3) en se basant sur un résultat des plusieurs passes de simulation, dans lequel au moins un paramètre d'entrée parmi l'ensemble de paramètres d'entrée est modifié sur plusieurs passes de simulation, et
dans lequel le au moins un paramètre d'entrée modifié sur plusieurs passes de simulation est un paramètre de réglage possible de la ligne d'emballage.

2. Procédé selon la revendication 1, dans lequel le programme de simulation comprend un jumeau numérique de la ligne d'emballage (3).

3. Procédé selon la revendication 1 ou 2, dans lequel des valeurs différentes du au moins un paramètre d'entrée modifié sur plusieurs passes de simulation sont saisies par un opérateur.

4. Procédé selon l'une quelconque des revendications précédentes, dans lequel au moins un paramètre d'entrée parmi l'ensemble de paramètres d'entrée reste le même sur plusieurs passes de simulation.

5. Procédé selon la revendication 4, dans lequel le au moins un paramètre d'entrée resté le même sur plusieurs passes de simulation est un paramètre de réglage de la ligne d'emballage (3) qui est spécifié comme étant fixe et/ou qui doit être conservé.

6. Procédé selon l'une quelconque des revendications précédentes, dans lequel au moins un paramètre d'entrée parmi l'ensemble de paramètres d'entrée décrit un fonctionnement actuellement en cours de la ligne d'emballage (3).

7. Procédé selon la revendication 6, dans lequel le au moins un paramètre d'entrée décrivant un fonctionnement actuellement en cours de la ligne d'emballage (3) reste le même sur plusieurs passes de simulation.

8. Procédé selon l'une quelconque des revendications précédentes, dans lequel chaque passe de simulation comprend l'étape ci-dessous consistant à :
c) évaluer un résultat de l'opération de simulation.

9. Procédé selon l'une quelconque des revendications précédentes, dans lequel le au moins un paramètre de réglage destiné à la ligne d'emballage (3) est déterminé en se basant sur une comparaison des résultats des différentes passes de simulation.

10. Procédé selon l'une quelconque des revendications précédentes, dans lequel le procédé est mis en œuvre pendant un fonctionnement de la ligne d'emballage (3).

11. Procédé selon l'une quelconque des revendications précédentes, dans lequel le au moins un paramètre de réglage est affiché sous forme de recommandation de réglage et/ou dans lequel le au moins un paramètre de réglage est automatiquement adopté pour le réglage de la ligne d'emballage (3).

12. Système d'emballage (1) comprenant une ligne d'emballage (3), dans lequel la ligne d'emballage (3) comprend un dispositif de fourniture de produits (5) qui est configuré pour fournir des produits à emballer ;
la ligne d'emballage (3) comprend une machine d'emballage (7) configurée pour emballer les produits fournis ;
le système d'emballage (1) comprend un dispositif de simulation (47) configuré pour simuler un fonctionnement de la ligne d'emballage (3) grâce à un programme de simulation en se basant sur un ensemble de paramètres d'entrée procuré ; et
le dispositif de simulation est configuré pour faire varier au moins un paramètre d'entrée issu de l'ensemble de paramètres d'entrée sur plusieurs opérations de simulation et pour utiliser, pour les paramètres d'entrée restants, respectivement une valeur actuellement disponible pendant le fonctionnement en cours de la ligne d'emballage (3).

13. Système d'emballage selon la revendication 12, dans lequel le dispositif de fourniture de produits (5) comprend un dispositif de production de produits (53), ou un dispositif de découpe de produits (13), ou un dispositif de transport de produits (17).
